# EUROPEAN PATENT SPECIFICATION

(11) **EP 4 488 540 B1**
(45) Date of publication and mention of the grant of the patent: **24.09.2025**
(21) Application number: 24186241.6
(22) Date of filing: 03.07.2024
(51) Int. Cl.: F16D 65/00, B60T 1/04

(54) **BRAKE SHOE ATTACHMENT STRUCTURE OF TREAD BRAKE UNIT DEVICE AND BRAKE SHOE OF TREAD BRAKE UNIT DEVICE**
BREMSSCHUH-BEFESTIGUNGSSTRUKTUR EINER KLOTZBREMSEINHEIT UND BREMSBACKE EINER KLOTZBREMSEINHEITSVORRICHTUNG
STRUCTURE DE FIXATION DE PATIN DE FREIN DE DISPOSITIF D'UNITÉ DE FREIN DE BANDE DE ROULEMENT ET PATIN DE FREIN DE DISPOSITIF D'UNITÉ DE FREIN DE BANDE DE ROULEMENT

(30) Priority: 05.07.2023 JP 2023110864
(43) Date of publication of application: 08.01.2025
(73) Proprietor: NABTESCO CORPORATION, Chiyoda-ku Tokyo 102-0093 (JP)
(72) Inventor: Watanabe, Keisuke, Chiyoda-ku, Tokyo, 102-0093 (JP); Aso, Masashi, Chiyoda-ku, Tokyo, 102-0093 (JP); Kuga, Takashi, Chiyoda-ku, Tokyo, 102-0093 (JP); Ihara, Kazumasa, Chiyoda-ku, Tokyo, 102-0093 (JP); Fujiwara, Ryosuke, Chiyoda-ku, Tokyo, 102-0093 (JP)
(74) Representative: Grünecker Patent- und Rechtsanwälte PartG mbB

(56) References cited:
- EP-A1- 3 851 698
- FR-A1- 3 034 831
- JP-A- 2012 041 994
- JP-A- 2020 530 087
- JP-U- H 058 068

## Description

### TECHNICAL FIELD

The present invention relates to a brake shoe attachment structure of a tread brake unit device and to a brake shoe of a tread brake unit device.

### BACKGROUND

A caliper brake device disclosed in Patent Literature 1 is provided with a brake pad having a groove and a shoe holder supporting the brake pad, where the shoe holder has a through hole at the center that is in communication with the groove. The through hole is connected to a negative pressure source via a tube connected to the back surface of the shoe holder. As the brake pad is pressed against the disc, abrasion powder is created and suctioned through the through hole and tube.

### RELEVANT REFERENCE

### LIST OF RELEVANT PATENT LITERATURE

Patent Literature 1: Japanese Patent Application Publications (Translation of PCT Application) No. 2020-530087 and 2012-41994.

### SUMMARY

A tread brake unit device may brake a vehicle having a wheel by pressing its brake shoe against the tread of the wheel. The brake shoe is attached onto a shoe head of the tread brake unit device in the following manner. The protrusion of the brake shoe is fitted in the depression of the shoe head, and a shoe cotter is inserted into the depression and into the opening in the protrusion. In other words, while the brake shoe remains attached on the shoe head by means of the shoe cotter, the shoe cotter is interposed between the brake shoe and the shoe head. Therefore, if the tube connected to the negative pressure source is provided on the path along which the shoe cotter is inserted, the brake shoe can not be replaced without requiring that the tube be removed before the brake shoe is removed.

The above-described problems can be solved by a brake shoe attachment structure of a tread brake unit device, including: a shoe head having a depression for receiving a protrusion of a brake shoe; a shoe cotter configured to be inserted into the depression and into an opening in the protrusion so that the shoe cotter attaches the brake shoe onto the shoe head; and a dust collector configured to collect abrasion powder resulting from the brake shoe being pressed against a tread of a wheel, wherein the dust collector is provided outside a path along which the shoe cotter is inserted.

In the above-described implementation, the dust collector is provided outside the path along which the shoe cotter may be inserted. Here, the path passes through the depression in the shoe head and the opening in the protrusion of the brake shoe. Accordingly, the brake shoe can be detached from and attached onto the shoe head with a tube remaining connected to the dust collector.

In one embodiment of the brake shoe attachment structure of the tread brake unit device, the shoe cotter may be L-shaped, the brake shoe attachment structure may further include a lock movable between (i) a restriction position where the lock restricts movement of the shoe cotter received in the depression and the opening in the protrusion and (ii) a non-restriction position where the lock allows the shoe cotter to move, and the dust collector may be provided outside the path along which the shoe cotter is inserted and a path along which the lock moves.

In one embodiment of the brake shoe attachment structure of the tread brake unit device, the brake shoe may have a suction port through which the abrasion powder is suctioned, the dust collector may have a channel provided in the shoe head and connected to the suction port, and the channel may have a tube connection port connected to a negative pressure source, and the tube connection port may be formed in the shoe head and positioned outside the path along which the shoe cotter is inserted.

In one embodiment of the brake shoe attachment structure of the tread brake unit device, the dust collector may include a suction port through which the abrasion powder is suctioned, and a tube connecting the suction port to a negative pressure source, the shoe head may have a support portion supporting the tube, and the support portion may be provided outside the path along which the shoe cotter is inserted.

In one embodiment of the brake shoe attachment structure of the tread brake unit device, the suction port of the dust collector may be positioned on a side opposite to a side where a flange is provided in a width direction of the tread of the wheel.

In one embodiment of the brake shoe attachment structure of the tread brake unit device, with the brake shoe attachment structure being provided on a vehicle including the wheel, the suction port of the dust collector may open toward outside of the vehicle.

In one embodiment of the brake shoe attachment structure of the tread brake unit device, the suction port of the dust collector may include a first opening and a second opening respectively opening toward opposite sides in a direction in which a vehicle having the wheel travels, and the dust collector may include a switch for opening a front one of the first and second openings and closing a rear one of the first and second openings in the direction in which the vehicle travels.

In one embodiment of the brake shoe attachment structure of the tread brake unit device, at least one of an upper portion or a lower portion of the shoe head may have the suction port of the dust collector. In one embodiment of the brake shoe attachment structure of the tread brake unit device, the upper and lower portions of the shoe head each may have the suction port, and the dust collector may include: an adjusting valve for adjusting a suction force at the suction ports in the upper and lower portions of the shoe head; an obtaining unit for obtaining traveling information indicating a direction in which the wheel travels; and a control unit for controlling the adjusting valve based on the traveling information such that a suction force at the suction port upstream in a direction of rotation of the wheel declines by a predetermined amount and a suction force at the suction port downstream in the direction of the rotation of the wheel grows by the predetermined amount.

In one embodiment of the brake shoe attachment structure of the tread brake unit device, the suction port may have a greater width than the brake shoe. In one embodiment of the brake shoe attachment structure of the tread brake unit device, the suction port may extend outwardly beyond a longitudinal end of the brake shoe.

In one embodiment of the brake shoe attachment structure of the tread brake unit device, the tube of the dust collector may be connected to the suction port at a site on a side opposite to a side where a flange is provided in a width direction of the tread of the wheel.

One embodiment of the brake shoe of the tread brake unit device may include: a pedestal plate shaped like a curved plate, the pedestal plate having a protrusion to fit in a depression in a shoe head, and a lock plate to engage with the shoe head for positioning; and a friction member provided on a surface of the pedestal plate facing away from a surface where the protrusion and the lock plate are provided, the friction member being configured to be pressed against a wheel. A dust collector may be provided on the pedestal plate outside the lock plate in a longitudinal direction of the pedestal plate, and the dust collector may be configured to collect abrasion powder resulting from the friction member being pressed against the wheel.

In the above-described implementation, the dust collector is provided on the pedestal plate outside the lock plate in the longitudinal direction of the pedestal plate. Therefore, the brake shoe can be attached onto or detached from the shoe head with the tube remaining connected to the suction port.

One embodiment of the brake shoe of the tread brake unit device may include a pedestal plate shaped like a curved plate, the pedestal plate having a protrusion on one surface thereof to fit in a depression in a shoe head; and a friction member provided on a surface of the pedestal plate facing away from the surface where the protrusion is provided and where a lock plate that is configured to engage with the shoe head for positioning is provided, the friction member being configured to be pressed against a wheel. The friction member may be constituted by a composite member mainly made of synthetic resin, and a metal block extending through the composite member to be exposed at a friction surface facing the wheel, and the metal block may have a suction port through which abrasion powder of the friction member is suctioned.

In the above-described implementation, the suction port is formed in the metal block of the brake shoe. The metal block of the friction member is less fragile than synthetic resin. The suction port can be thus manufactured more readily in the metal block than in synthetic resin.

### ADVANTAGEOUS EFFECTS

According to the present invention, the brake shoe can be attached onto or detached from the shoe head with the tube remaining connected to the dust collector or suction port.

### BRIEF DESCRIPTION OF THE DRAWINGS

Fig. 1 is a sectional view schematically showing a configuration of a tread brake unit device relating to a first embodiment.
Fig. 2 is a front perspective view showing a brake shoe attachment structure of the tread brake unit device relating to the first embodiment.
Fig. 3 is a rear view showing the brake shoe attachment structure of the tread brake unit device relating to the first embodiment.
Fig. 4 is a sectional view along the line 4-4 in Fig. 3 showing the brake shoe attachment structure of the tread brake unit device relating to the first embodiment.
Fig. 5 is a front perspective view showing a brake shoe attachment structure of a tread brake unit device relating to a second embodiment.
Fig. 6 is a rear view showing the brake shoe attachment structure of the tread brake unit device relating to the second embodiment.
Fig. 7 is a sectional view along the line 7-7 in Fig. 6 showing the brake shoe attachment structure of the tread brake unit device relating to the second embodiment.
Fig. 8 is a bottom view showing the brake shoe attachment structure of the tread brake unit device relating to the second embodiment.
Fig. 9 is a front perspective view showing a brake shoe attachment structure of a tread brake unit device relating to a third embodiment.
Fig. 10 is a rear perspective view showing the brake shoe attachment structure of the tread brake unit device relating to the third embodiment.
Fig. 11 is a side view showing the brake shoe attachment structure of the tread brake unit device relating to the third embodiment.
Fig. 12 is a sectional view along the line 12-12 in Fig. 11 showing the brake shoe attachment structure of the tread brake unit device relating to the third embodiment.
Fig. 13 is a sectional view along the line 12-12 in Fig. 11 showing the brake shoe attachment structure of the tread brake unit device relating to the third embodiment.
Fig. 14 is a front perspective view showing a brake shoe attachment structure of a tread brake unit device relating to a fourth embodiment.
Fig. 15 is a front view showing the brake shoe attachment structure of the tread brake unit device relating to the fourth embodiment.
Fig. 16 is a front view showing a shoe head of the tread brake unit device relating to the fourth embodiment.
Fig. 17 is a side view showing the brake shoe attachment structure of the tread brake unit device relating to the fourth embodiment.
Fig. 18 is a sectional view showing a brake shoe attachment structure of a tread brake unit device relating to a fifth embodiment.
Fig. 19 is a front view showing the brake shoe attachment structure of the tread brake unit device relating to the fifth embodiment.
Fig. 20 is a front view showing a shoe head of the tread brake unit device relating to the fifth embodiment.
Fig. 21 is a sectional view along the line 21-21 in Fig. 19 showing a brake shoe of the tread brake unit device relating to the fifth embodiment.
Fig. 22 is a sectional view showing a brake shoe attachment structure of a tread brake unit device relating to a sixth embodiment.
Fig. 23 is a sectional view showing a brake shoe attachment structure of a tread brake unit device relating to a seventh embodiment.
Fig. 24 is a sectional view showing the brake shoe attachment structure of the tread brake unit device relating to the seventh embodiment.
Fig. 25 is a sectional view showing a brake shoe attachment structure of a tread brake unit device relating to an eighth embodiment.
Fig. 26 is a planar view showing a dust collecting device relating to a ninth embodiment.

### DESCRIPTION OF THE PREFERRED EMBODIMENTS

### <First Embodiment>

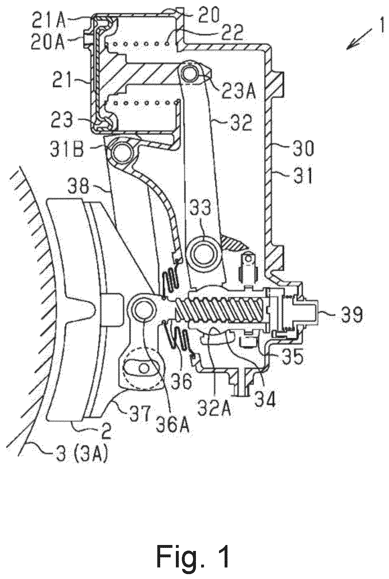

The following describes a brake shoe attachment structure of a tread brake unit device according to a first embodiment with reference to Figs. 1 to 4. A tread brake unit device is mounted on a bogie of a railway vehicle and has a brake shoe to brake the railway vehicle by pressing the brake shoe against the tread of the wheel.

### <Tread Brake Unit Device 1>

As shown in Fig 1, the tread brake unit device 1 includes an air brake cylinder 20 for outputting a brake force by means of air. The tread brake unit device 1 includes a transmission drive unit 30 for transmitting the brake force output from the air brake cylinder 20 to a shoe head 37. The transmission drive unit 30 has a hollow body 31.

### <Air Brake Cylinder 20>

The air brake cylinder 20 includes a cylinder 21 having a cylindrical shape and a bottom. The cylinder 21 is connected to the left side of the body 31. The air brake cylinder 20 has a loosening spring 22, and a piston 23 to be energized by the loosening spring 22. The piston 23 has an end that protrudes into the body 31 and that is rotatably connected to a brake lever 32 via a connecting pin 23A. The brake lever 32 may rotate on a support shaft 33, which is fixedly attached to the body 31. The brake lever 32 is coupled at one end (the upper end in the drawing) to the piston 23.

The bottom of the cylinder 21 (shown on the left side) has a feeding port 20A through which compressed air is fed into the cylinder 21. The compressed air is fed to a working chamber 21A defined by the cylinder 21 and the piston 23. Subsequent to the compressed air being fed into the working chamber 21A, the piston 23 of the air brake cylinder 20 moves in such a direction (to the right side) that the piston 33 protrudes out from the cylinder 21, as a result of which the brake lever 32 is rotated clockwise. Subsequent to the compressed air being discharged from the working chamber 21A, on the other hand, the piston 23 of the air brake cylinder 20 is moved by the loosening spring 22 toward the bottom of the cylinder 21 (to the left side), as a result of which the brake lever 32 is rotated anti-clockwise.

### <Transmission Drive Unit 30>

The transmission drive unit 30 includes the above-mentioned brake lever 32, a spherical bearing 34 fitted in a spherical through hole 32A in the other end of the brake lever 32, and a cylindrical casing rod 35 having an outer peripheral surface on which the spherical bearing 34 is fixedly provided. The transmission drive unit 30 includes a pressing rod 36 screwed into the casing rod 35. The base end of the pressing rod 36 is screwed into and coupled with the casing rod 35. On the other end of the pressing rod 36, the shoe head 37 is rotatably attached via a coupling pin 36A. A hanger 38 is rotatably provided on the body 31 via a coupling pin 31B. The shoe head 37 is rotatably attached to the hanger 38 via the coupling pin 36A. The shoe head 37 has a brake shoe 2 attached thereto, which is to be pressed against a tread 3A of a wheel 3 of a railway vehicle.

When the brake lever 32 turns clockwise on the support shaft 33, the brake shoe 2 is, together with the casing rod 35 and the pressing rod 36, pushed toward the tread 3A of the wheel 3, so that the brake shoe 2 is pressed against the tread 3A of the wheel 3. This can brake the rotation of the wheel 3. When the brake lever 32 is rotated by the air brake cylinder 20 clockwise, the degree at which the brake shoe 2 is pressed against the tread 3A of the wheel 3, in other words, the abrasion amount increases as the amount of the rotation increases. When the brake lever 32 turns anti-clockwise on the support shaft 33, on the other hand, the brake shoe 2 is, together with the casing rod 35 and the pressing rod 36, moved away from the tread 3A of the wheel 3 so that the braking applied on the rotation of the wheel 3 is undone.

### <Dust Collecting Device>

As the brake shoe 2 is pressed against the tread 3A of the wheel 3, abrasion powder is produced. To address this issue, the tread brake unit device 1 has a dust collecting device to collect the abrasion powder. The dust collecting device includes a negative pressure source (not shown) for generating negative pressure, and a dust collector connected to the negative pressure source via a tube. The negative pressure source is disposed on the body of the railway vehicle.

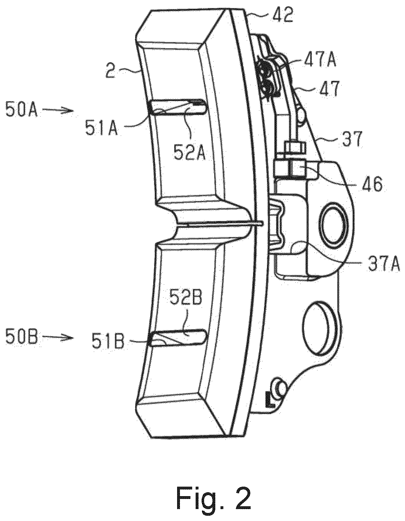

As shown in Fig. 2, the dust collector is disposed in the brake shoe 2 and shoe head 37. The dust collector includes a first dust collector 50A and a second dust collector 50B. The first dust collector 50A is close to the upper portion of the brake shoe 2. The second dust collector 50B is close to the lower portion of the brake shoe 2.

### <Brake Shoe 2>

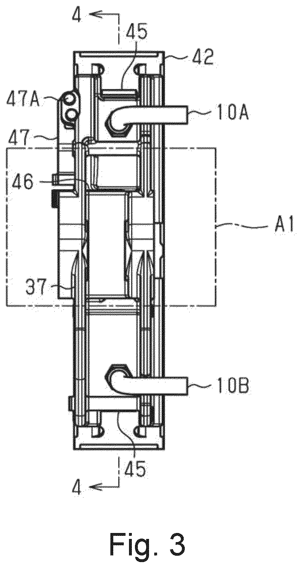

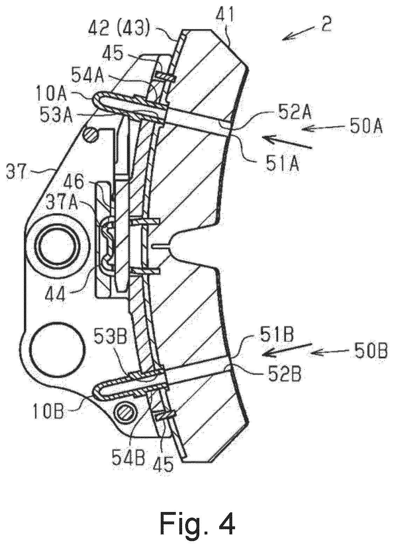

As shown in Figs. 3 and 4, the brake shoe 2 includes a friction member 41 and a metal pedestal 42. The friction member 41 is fixedly attached to the front side of the metal pedestal 42. The metal pedestal 42 includes a pedestal plate 43, an attachment plate 44 and a lock plate 45. The pedestal plate 43 is a curved plate extending along the shoe head 37. The attachment plate 44 is a plate member provided on the rear surface of the pedestal plate 43 and having an M shape when seen from side. The attachment plate 44 constitutes a protrusion to be fitted in a depression 37A in the shoe head 37. The lock plate 45 protrudes from the rear surface of the pedestal plate 43 and is designed to engage with the shoe head 37 for the purpose of positioning.

### <Brake Shoe Attachment Structure>

The brake shoe 2 is attached onto the shoe head 37 by means of a shoe cotter 46. The shoe cotter 46 is inserted into the depression 37A in the shoe head 37 and into an opening in the attachment plate 44. The shoe cotter 46 is L-shaped. The shoe head 37 has a lock 47. The lock 47 is movable between (i) a restriction position where the lock 47 can restrict the shoe cotter 46, which is inserted into the depression 37A in the shoe head 37 and the opening in the attachment plate 44, from moving and (ii) a non-restriction position where the lock 47 allows the shoe cotter 46 to move. The lock 47 can rotate about a rotational shaft 47A.

The first and second dust collectors 50A and 50B are provided outside the path along which the shoe cotter 46 may be inserted and the path along which the lock 47 may move. The brake shoe 2 has near its upper portion a first suction port 51A through which the abrasion powder can be suctioned. The first dust collector 50A has a first channel 52A that is provided near the upper portion of the shoe head 37 and that is connected to the first suction port 51A. The first channel 52A extends through the friction member 41 and is connected to a first through hole 53A in the pedestal plate 43. The first channel 52A has a first tube connection port 54A connected to the negative pressure source. The first tube connection port 54A is positioned in the shoe head 37 outside the path along which the shoe cotter 46 may be inserted and the path along which the lock 47 may move.

The brake shoe 2 has near its lower portion a second suction port 51B through which the abrasion powder can be suctioned. The second dust collector 50B has a second channel 52B that is provided near the lower portion of the shoe head 37 and that is connected to the second suction port 51B. The second channel 52B extends through the friction member 41 and is connected to a second through hole 53B in the pedestal plate 43. The second channel 52B has a second tube connection port 54B connected to the negative pressure source. The second tube connection port 54B is positioned in the shoe head 37 outside the path along which the shoe cotter 46 may be inserted and the path along which the lock 47 may move.

Referring to Fig. 3, the shoe cotter 46 may be inserted along a path A1 indicated by the dotted line. The first tube connection port 54A is positioned near the upper portion of the rear surface of the shoe head 37 and between the lock plate 45 protruding from the rear surface of the shoe head 37 and the path A1. The second tube connection port 54B is positioned near the lower portion of the rear surface of the shoe head 37 and between the lock plate 45 protruding from the rear surface of the shoe head 37 and the path A1.

### <Operation>

The following now describes how the above-described dust collecting device works with reference to Fig. 4. As the negative pressure source is put into operation, the first and second dust collectors 50A and 50B may suction the abrasion powder. The abrasion powder in the vicinity of the first and second suction ports 51A and 51B is suctioned. The abrasion powder suctioned through the first suction port 51A is collected through the first channel 52A and first tube 10A. The abrasion powder suctioned through the second suction port 51B is collected through the second channel 52B and second tube 10B.

The first and second dust collectors 50A and 50B are not positioned in the path along which the shoe cotter 46 may be inserted or the path along which the lock 47 may be moved, and neither are the first and second tube connection ports 54A and 54B. To be replaced, the brake shoe 2 can be thus removed from the shoe head 37 while the first tube 10A remains connected to the first dust collector 50A and the second tube 10B remains connected to the second dust collector 50B.

### Advantageous effects of the first embodiment will be now described.

(1-1) The first and second dust collectors 50A and 50B are positioned outside the path along which the shoe cotter 46 may be inserted, which passes through the depression 37A in the shoe head 37 and the opening in the attachment plate 44 of the brake shoe 2. Therefore, the brake shoe 2 can be detached from and attached onto the shoe head 37 while the first tube 10A remains connected to the first dust collector 50A and the second tube 10B remains connected to the second dust collector 50B.

(1-2) Due to the L-shape of the shoe cotter 46, the first and second dust collectors 50A and 50B can be more freely positioned in the longitudinal direction of the shoe head 37.

(1-3) The first and second tube connection ports 54A and 54B are positioned in the shoe head 37 outside the path along which the shoe cotter 46 may be inserted, which passes through the depression 37A in the shoe head 37 and the opening in the attachment plate 44 of the brake shoe 2. The brake shoe 2 can be thus detached from and attached onto the shoe head 37 while the first tube 10A remains connected to the first tube connection port 54A and the second tube 10B remains connected to the second tube connection port 54B.

### <Second Embodiment>

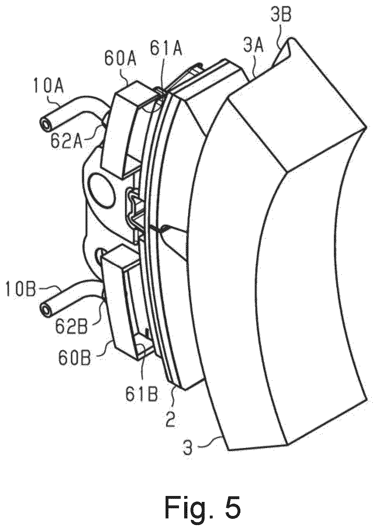

The following describes a brake shoe attachment structure of a tread brake unit device according to a second embodiment with reference to Figs. 5 to 8. The second embodiment is different from the first embodiment in that the dust collector is not provided in the brake shoe 2 but in the shoe head 37. The following description will be focused on the differences from the first embodiment.

### <Brake Shoe Attachment Structure>

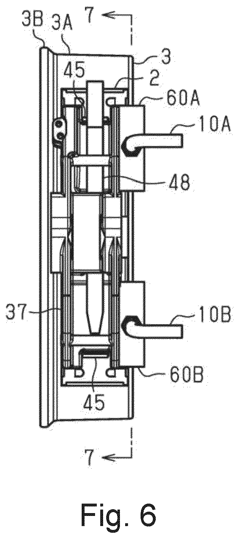

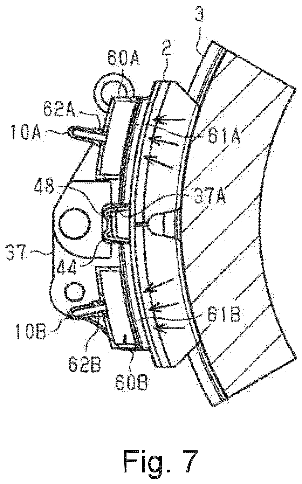

The brake shoe 2 is attached onto the shoe head 37 by means of a shoe cotter 48, as shown in Figs. 6 and 7. The shoe cotter 48 is a plate member curved along the pedestal plate 43, and its upper end is rolled. The shoe cotter 48 is inserted into the depression 37A in the shoe head 37 and into the opening in the attachment plate 44.

### <Dust Collecting Device>

As shown in Figs. 5 to 8, the dust collector is disposed in the shoe head 37. The dust collector includes a first dust collector 60A and a second dust collector 60B. The first and second dust collectors 60A and 60B are provided outside the path along which the shoe cotter 48 may be inserted. The first dust collector 60A is shaped like a box having an opening, and provided near the upper portion of the shoe head 37. The first dust collector 60A includes a first suction port 61A through which the abrasion powder is suctioned, and a first tube 10A connecting the first suction port 61A to the negative pressure source. The opening of the first dust collector 60A serves as the first suction port 61A. The first suction port 61A is positioned on the side opposite to the side where the flange 3B is provided, in the width direction of the tread 3A of the wheel 3. The first tube 10A is connected to the first suction port 61A at a site on the side opposite to the side where the flange 3B is positioned. The shoe head 37 has a first support portion 62A supporting the first tube 10A. The first support portion 62A is provided outside the path along which the shoe cotter 48 may be inserted. The first dust collector 60A is positioned outside of the lock plate 45, in the width direction of the shoe head 37. Therefore, the first support portion 62A can be positioned so as not to interfere with the path along which the shoe cotter 48 may be inserted.

The second dust collector 60B is shaped like a box having an opening, and provided near the lower portion of the shoe head 37. The second dust collector 60B includes a second suction port 61B through which the abrasion powder is suctioned, and a second tube 10B connecting the second suction port 61B to the negative pressure source. The opening of the second dust collector 60B serves as the second suction port 61B. The second suction port 61B is positioned on the side opposite to the side where the flange 3B is provided, in the width direction of the tread 3A of the wheel 3. The second tube 10B is connected to the second suction port 61B at a site on the side opposite to the side where the flange 3B is positioned. The shoe head 37 has a second support portion 62B supporting the second tube 10B. The second support portion 62B is provided outside the path along which the shoe cotter 48 may be inserted. The second dust collector 60B is positioned outside of the lock plate 45, in the width direction of the shoe head 37. Therefore, the second support portion 62B can be positioned so as not to interfere with the path along which the shoe cotter 48 may be inserted.

### <Operation>

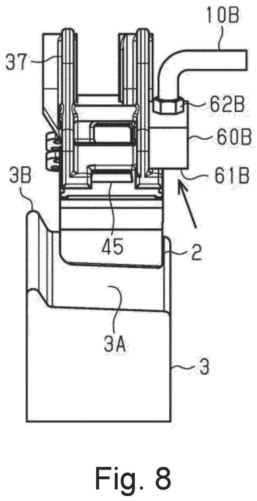

The following now describes how the above-described dust collecting device works with reference to Figs. 7 and 8.

As the negative pressure source is put into operation, the first and second dust collectors 60A and 60B may suction the abrasion powder. The abrasion powder in the vicinity of the first and second suction ports 61A and 61B is suctioned. The abrasion powder suctioned through the first suction port 61A is collected through the first tube 10A. The abrasion powder suctioned through the second suction port 61B is collected through the second tube 10B. The abrasion powder that impinges on the flange 3B of the wheel 3, bounces back and scatters can be efficiently suctioned.

The first and second dust collectors 60A and 60B are not positioned in the path along which the shoe cotter 48 may be inserted or the path along which the lock 47 may be moved, and neither are the first and second support portions 62A and 62B. To be replaced, the brake shoe 2 can be thus removed from the shoe head 37 while the first tube 10A remains connected to the first dust collector 60A and the second tube 10B remains connected to the second dust collector 60B.

### Advantageous effects of the second embodiment will be now described.

(2-1) The first and second dust collectors 60A and 60B are provided outside the path along which the shoe cotter 48 may be inserted. Therefore, the brake shoe 2 may be detached from and attached onto the shoe head 37 while the first tube 10A remains connected to the first dust collector 60A and the second tube 10B remains connected to the second dust collector 60B.

(2-2) The first and second tubes 10A and 10B are supported at a site outside the path along which the shoe cotter 48 may be inserted. Therefore, the brake shoe 2 may be detached from and attached onto the shoe head 37 while the first and second tubes 10A and 10B remain connected to the shoe head 37.

(2-3) The first and second suction ports 61A and 61B are positioned on the side opposite to the side where the flange 3B is provided, in the width direction of the tread 3A of the wheel 3. The abrasion powder that impinges on the flange 3B of the wheel 3, bounces back and scatters can be thus efficiently suctioned.

(2-4) The first and second tubes 10A and 10B are connected to the first and second suction ports 61A and 61B at sites on the side opposite to the side where the flange 3B of the wheel 3 is positioned. Therefore, the first and second tubes 10A and 10B can be readily connected to the first and second suction ports 61A and 61B without interfering with the flange 3B of the wheel 3.

### <Third Embodiment>

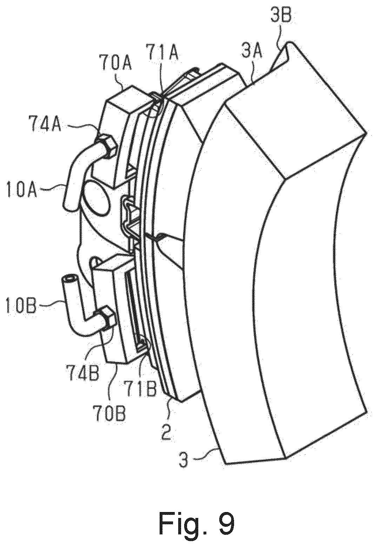

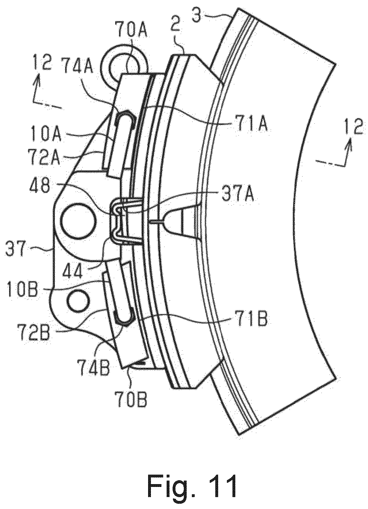

The following describes a brake shoe attachment structure of a tread brake unit device according to a third embodiment with reference to Figs. 9 to 13. The third embodiment is different from the second embodiment in that the dust collector changes its opening depending on the traveling direction. The following description will be focused on the differences from the second embodiment.

### <Brake Shoe Attachment Structure>

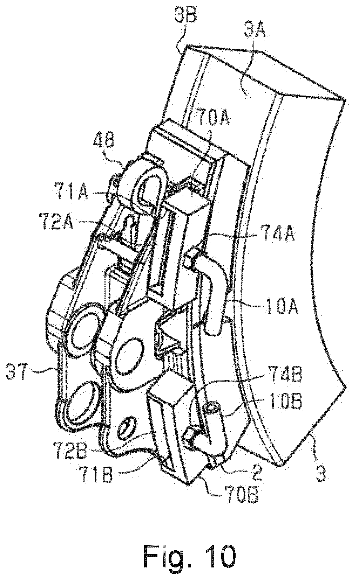

As shown in Fig. 10, the brake shoe 2 is attached onto the shoe head 37 by means of the shoe cotter 48. The shoe cotter 48 is a plate member curved along the pedestal plate 43, and its upper end is rolled. The shoe cotter 48 is inserted into the depression 37A in the shoe head 37 and into the opening in the attachment plate 44.

### <Dust Collecting Device>

As shown in Figs. 9 to 11, the dust collector is disposed in the shoe head 37. The dust collector includes a first dust collector 70A and a second dust collector 70B. The first and second dust collectors 70A and 70B are provided outside the path along which the shoe cotter 48 may be inserted. The first dust collector 70A is shaped like a box having openings facing frontward and rearward, and provided near the upper portion of the shoe head 37. The first dust collector 70A includes a first front opening 71A and a first rear opening 72A respectively opening toward the opposite sides in the direction in which the railway vehicle can travel, and also includes a first tube 10A connecting the first front and rear openings 71A and 72A to the negative pressure source. The first front opening 71A serves as a first opening, and the first rear opening 72A serves as a second opening. The first front and rear openings 71A and 72A are positioned on the side opposite to the side where the flange 3B is provided, in the width direction of the tread 3A of the wheel 3. The shoe head 37 has a first support portion 74A supporting the first tube 10A. The first support portion 74A is provided outside the path along which the shoe cotter 48 may be inserted. The first dust collector 70A is positioned outside of the lock plate 45, in the width direction of the shoe head 37. Therefore, the first support portion 74A can be positioned so as not to interfere with the path along which the shoe cotter 48 may be inserted.

The second dust collector 70B is shaped like a box having openings facing frontward and rearward, and provided near the lower portion of the shoe head 37. The second dust collector 70B includes a second front opening 71B and a second rear opening 72B respectively opening toward the opposite sides in the direction in which the railway vehicle can travel, and also includes a second tube 10B connecting the second front and rear openings 71B and 72B to the negative pressure source. The second front opening 71B serves as the first opening, and the second rear opening 72B serves as the second opening. The second front and rear openings 71B and 72B are positioned on the side opposite to the side where the flange 3B is provided, in the width direction of the tread 3A of the wheel 3. The shoe head 37 has a second support portion 74B supporting the second tube 10B. The second support portion 74B is provided outside the path along which the shoe cotter 48 may be inserted. The second dust collector 70B is positioned outside of the lock plate 45, in the width direction of the shoe head 37. Therefore, the second support portion 74B can be positioned so as not to interfere with the path along which the shoe cotter 48 may be inserted.

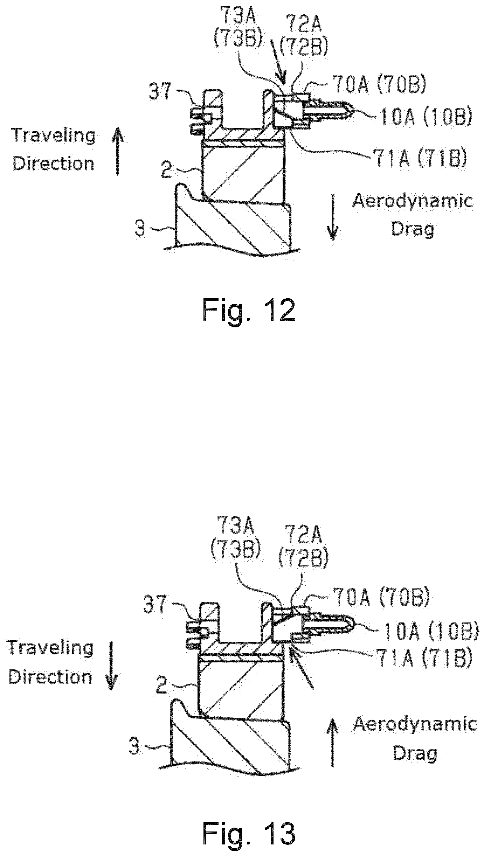

As shown in Figs. 12 and 13, the first dust collector 70A has a first valve 73A configured to open or close the first front and rear openings 71A and 72A depending on the traveling direction. Specifically, the first valve 73A opens the front opening, and closes the rear opening in the traveling direction. The first valve 73A serves as a switch configured to change its position when acted upon by aerodynamic drag. As shown in Fig. 12, the railway vehicle may travel upward in the drawing, which may produce aerodynamic drag acting from the upper side. When acted upon by the aerodynamic drag, the first valve 73A is pushed by the air flowing through the first rear opening 72A to close the first front opening 71A. As shown in Fig. 13, the railway vehicle may travel downward in the drawing, which may produce aerodynamic drag acting from the lower side. When acted upon by the aerodynamic drag, the first valve 73A is pushed by the air flowing through the first front opening 71A to close the first rear opening 72A.

The second dust collector 70B has a second valve 73B to open or close the second front and rear openings 71B and 72B depending on the traveling direction. Specifically, the second valve 73B opens the front opening, and closes the rear opening in the traveling direction. The second valve 73B serves as a switch configured to change its position when acted upon by aerodynamic drag. As shown in Fig. 12, the railway vehicle may travel upward in the drawing, which may produce aerodynamic drag acting from the upper side. When acted upon by the aerodynamic drag, the second valve 73B is pushed by the air flowing through the second rear opening 72B to close the second front opening 71B. As shown in Fig. 13, the railway vehicle may travel downward in the drawing, which may produce aerodynamic drag acting from the lower side. When acted upon by the aerodynamic drag, the second valve 73B is pushed by the air flowing through the second front opening 71B to close the second rear opening 72B.

### <Operation>

The following now describes how the above-described dust collecting device works with reference to Figs. 12 and 13.

As shown in Fig. 12, when acted upon by the aerodynamic drag from the upper side, the first valve 73A (second valve 73B) closes the first front opening 71A (second front opening 71B) and opens the first rear opening 72A (second rear opening 72B). Subsequently, the negative pressure source may start operating. As a result, the first and second dust collectors 70A and 70B may suction the abrasion powder through the first and second rear openings 72A and 72B. The abrasion powder is blown away by the aerodynamic drag in the opposite direction to the traveling direction. Therefore, the first and second dust collectors 70A and 70B may suction abrasion powder produced by another tread brake unit device 1 in front of the tread brake unit device 1 including the first and second dust collectors 70A and 70B. The abrasion powder suctioned through the first rear opening 72A is collected through the first tube 10A. The abrasion powder suctioned through the second rear opening 72B is collected through the second tube 10B.

As shown in Fig. 13, when acted upon by the aerodynamic drag from the lower side, the first valve 73A (second valve 73B) closes the first rear opening 72A (second rear opening 72B) and opens the first front opening 71A (second front opening 71B). Subsequently, the negative pressure source may start operating. As a result, the first and second dust collectors 70A and 70B may suction the abrasion powder through the first and second front openings 71A and 71B. The abrasion powder is blown away by the aerodynamic drag in the opposite direction to the traveling direction. Therefore, the first and second dust collectors 70A and 70B may suction abrasion powder produced by the tread brake unit device 1 including the first and second dust collectors 70A and 70B. The abrasion powder suctioned through the first front opening 71A is collected through the first tube 10A. The abrasion powder suctioned through the second front opening 71B is collected through the second tube 10B. The abrasion powder that impinges on the flange 3B of the wheel 3, bounces back and scatters can be efficiently suctioned.

The first and second dust collectors 70A and 70B are not positioned in the path along which the shoe cotter 48 may be inserted, and neither are the first and second support portions 74A and 74B. To be replaced, the brake shoe 2 can be thus removed from the shoe head 37 while the first tube 10A remains connected to the first dust collector 70A and the second tube 10B remains connected to the second dust collector 70B.

### Advantageous effects of the third embodiment will be now described.

(3-1) The first and second dust collectors 70A and 70B are provided outside the path along which the shoe cotter 48 may be inserted. Therefore, the brake shoe 2 may be detached from and attached onto the shoe head 37 while the first tube 10A remains connected to the first dust collector 70A and the second tube 10B remains connected to the second dust collector 70B.

(3-2) The first and second tubes 10A and 10B are supported at a site outside the path along which the shoe cotter 48 may be inserted. Therefore, the brake shoe 2 may be detached from and attached onto the shoe head 37 while the first and second tubes 10A and 10B remain connected to the shoe head 37.

(3-3) The first front and rear openings 71A and 72A and second front and rear openings 71B and 72B are positioned on the side opposite to the side where the flange 3B is provided, in the width direction of the tread 3A of the wheel 3. The abrasion powder that impinges on the flange 3B of the wheel 3, bounces back and scatters can be thus efficiently suctioned.

(3-4) The first and second valves 73A and 73B can close the rear opening, which is determined by the traveling direction. The aerodynamic drag may take away the abrasion powder, but the dust collection capability can be prevented from being compromised as the openings are switched depending on the aerodynamic drag.

(3-5) The first and second tubes 10A and 10B are connected to the first and second dust collectors 70A and 70B at sites on the side opposite to the side where the flange 3B of the wheel 3 is positioned. Therefore, the first and second tubes 10A and 10B can be readily connected to the first and second dust collectors 70A and 70B without interfering with the flange 3B of the wheel 3.

### <Fourth Embodiment>

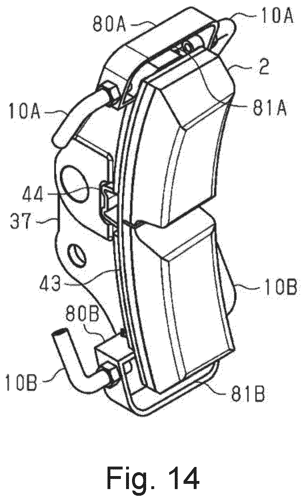

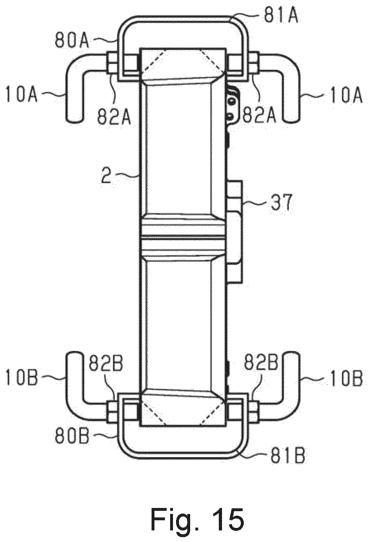

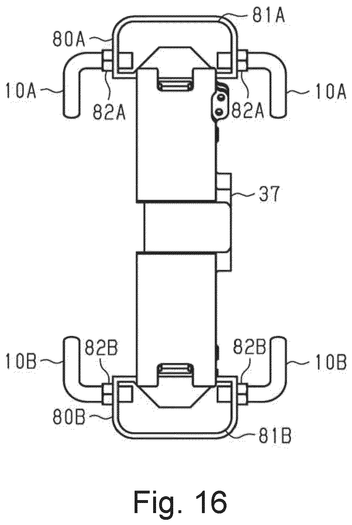

The following describes a brake shoe attachment structure of a tread brake unit device according to a fourth embodiment with reference to Figs. 14 to 17. The fourth embodiment is different from the second embodiment in that the dust collector has its components in the upper and lower portions of the shoe head. The following description will be focused on the differences from the second embodiment.

### <Brake Shoe Attachment Structure>

The brake shoe 2 is attached onto the shoe head 37 by means of the shoe cotter 46. The shoe cotter 46 is inserted into the depression 37A in the shoe head 37 and into the opening in the attachment plate 44. The shoe cotter 46 is L-shaped. The shoe head 37 has the lock 47. The lock 47 is movable between (i) a restriction position where the lock 47 can restrict the shoe cotter 46, which is inserted into the depression 37A in the shoe head 37 and the opening in the attachment plate 44, from moving and (ii) a non-restriction position where the lock 47 allows the shoe cotter 46 to move.

### <Dust Collecting Device>

As shown in Figs. 14 to 16, the dust collector is disposed in the shoe head 37. The dust collector includes a first dust collector 80A and a second dust collector 80B. The first and second dust collectors 80A and 80B are provided outside the path along which the shoe cotter 46 may be inserted. The first dust collector 80A is shaped like a box having an opening, and provided in the upper portion of the shoe head 37. The first dust collector 80A includes a first suction port 81A through which the abrasion powder is suctioned, and two first tubes 10A connecting the first suction port 81A to the negative pressure source. The opening of the first dust collector 80A serves as the first suction port 81A. The first dust collector 80A is integrated with the shoe head 37. The first tubes 10A are connected to the opposite lateral surfaces of the first dust collector 80A. The shoe head 37 has two first support portions 82A supporting the first tubes 10A. The first support portions 82A are provided outside the path along which the shoe cotter 46 may be inserted. The first suction port 81A of the first dust collector 80A has a greater width than the brake shoe 2. The first suction port 81A extends outwardly beyond the longitudinal end of the brake shoe 2. The abrasion powder above the brake shoe 2 can be thus efficiently suctioned.

The second dust collector 80B is shaped like a box having an opening, and provided in the lower portion of the shoe head 37. The second dust collector 80B includes a second suction port 81B through which the abrasion powder is suctioned, and two second tubes 10B connecting the second suction port 81B to the negative pressure source. The opening of the second dust collector 80B serves as the second suction port 81B. The second dust collector 80B is integrated with the shoe head 37. The second tubes 10B are connected to the opposite lateral surfaces of the second dust collector 80B. The shoe head 37 has two second support portions 82B supporting the second tubes 10B. The second support portions 82B are provided outside the path along which the shoe cotter 46 may be inserted. The second suction port 81B of the second dust collector 80B has a greater width than the brake shoe 2. The second suction port 81B extends outwardly beyond the longitudinal end of the brake shoe 2. The abrasion powder below the brake shoe 2 can be thus efficiently suctioned.

### <Operation>

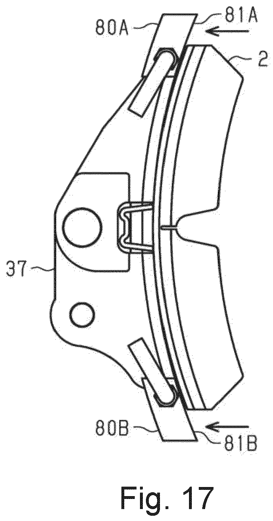

The following now describes how the above-described dust collecting device works with reference to Fig. 17. As the negative pressure source is put into operation, the first and second dust collectors 80A and 80B may suction the abrasion powder. The abrasion powder in the vicinity of the first and second suction ports 81A and 81B is suctioned. The abrasion powder suctioned through the first suction port 81A is collected through the first tubes 10A. The abrasion powder suctioned through the second suction port 81B is collected through the second tubes 10B.

The first and second dust collectors 80A and 80B are not positioned in the path along which the shoe cotter 46 may be inserted or the path along which the lock 47 may be moved, and neither are the first and second support portions 82A and 82B. To be replaced, the brake shoe 2 can be thus removed from the shoe head 37 while the first tubes 10A remain connected to the first dust collector 80A and the second tubes 10B remain connected to the second dust collector 80B.

### Advantageous effects of the fourth embodiment will be now described.

(4-1) The first and second dust collectors 80A and 80B are provided outside the path along which the shoe cotter 46 may be inserted. Therefore, the brake shoe 2 may be detached from and attached onto the shoe head 37 while the first tubes 10A remain connected to the first dust collector 80A and the second tubes 10B remain connected to the second dust collector 80B.

(4-2) The first and second tubes 10A and 10B are supported at a site outside the path along which the shoe cotter 46 may be inserted. Therefore, the brake shoe 2 may be detached from and attached onto the shoe head 37 while the first and second tubes 10A and 10B remain connected to the shoe head 37.

(4-3) The first and second dust collectors 80A and 80B are respectively provided in the upper and lower portions of the shoe head 37. Therefore, a large amount of abrasion powder downstream in the direction of the rotation of the wheel 3 can be efficiently suctioned.

(4-4) The first and second suction ports 81A and 81B have a greater width than the brake shoe 2. This enables the dust collector to suction the abrasion powder scattering outward from the brake shoe 2. Accordingly, the abrasion powder can be more efficiently suctioned than in the case where the suction ports have a smaller width than the brake shoe 2.

(4-5) The first and second suction ports 81A and 81B extend outwardly beyond the longitudinal ends of the brake shoe 2. This enables the dust collector to suction the abrasion powder scattering outward from the brake shoe 2. Accordingly, the abrasion powder can be more efficiently suctioned than in the case where the suction ports do not extend outward beyond the longitudinal ends of the brake shoe 2.

### <Fifth Embodiment>

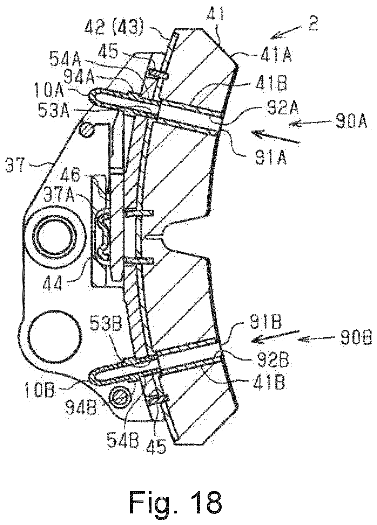

The following describes a brake shoe attachment structure of a tread brake unit device according to a fifth embodiment with reference to Figs. 18 to 21. The fifth embodiment is different from the first embodiment in that the dust collector may be provided on a metal block of a combined brake shoe. The following description will be focused on the differences from the first embodiment.

### <Brake Shoe Attachment Structure>

As shown in Fig. 18, the friction member 41 of the brake shoe 2 is constituted by a composite member 41A mainly made of synthetic resin, and metal blocks 41B extending through the composite member 41A to be exposed at the friction surface facing the wheel 3. The metal blocks 41B are arranged near upper and lower portions of the friction member 41. The brake shoe 2 is attached onto the shoe head 37 by means of the shoe cotter 46. The shoe cotter 46 is inserted into the depression 37A in the shoe head 37 and into the opening in the attachment plate 44. The shoe cotter 46 is L-shaped. The shoe head 37 has the lock 47. The lock 47 is movable between (i) a restriction position where the lock 47 can restrict the shoe cotter 46, which is inserted into the depression 37A in the shoe head 37 and the opening in the attachment plate 44, from moving and (ii) a non-restriction position where the lock 47 allows the shoe cotter 46 to move.

### <Dust Collecting Device>

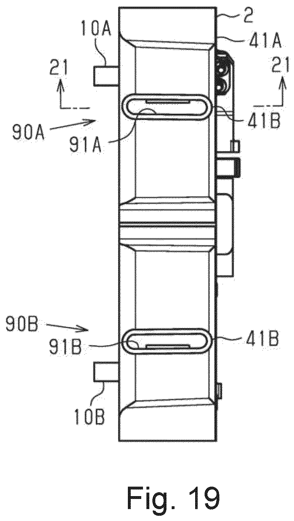

As shown in Figs. 18 and 19, the dust collector is disposed in the brake shoe 2 and shoe head 37. The dust collector includes a first dust collector 90A and a second dust collector 90B. The first and second dust collectors 90A and 90B are provided outside the path along which the shoe cotter 46 may be inserted and the path along which the lock 47 may move. In the upper portion of the brake shoe 2, a first suction port 91A through which the abrasion powder may be suctioned is formed in the upper metal block 41B. The first dust collector 90A has a first channel 92A that is provided near the upper portion of the shoe head 37 and connected to the first suction port 91A. The first channel 92A extends through the metal block 41B and is connected to a first through hole 93A in the pedestal plate 43. The first channel 92A has a first tube connection port 94A connected to the negative pressure source. The first tube connection port 94A is positioned in the shoe head 37 outside the path along which the shoe cotter 46 may be inserted and the path along which the lock 47 may move.

In the lower portion of the brake shoe 2, a second suction port 91B through which the abrasion powder is suctioned is formed in the lower metal block 41B. The second dust collector 90B has a second channel 92B that is provided near the lower portion of the shoe head 37 and connected to the second suction port 91B. The second channel 92B extends through the metal block 41B and is connected to a second through hole 93B in the pedestal plate 43. The second channel 92B has a second tube connection port 94B connected to the negative pressure source. The second tube connection port 94B is positioned in the shoe head 37 outside the path along which the shoe cotter 46 may be inserted and the path along which the lock 47 may move.

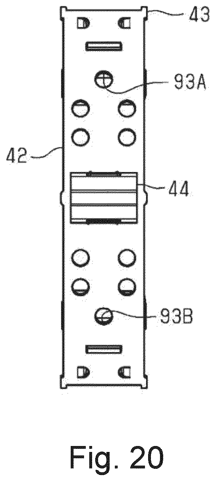

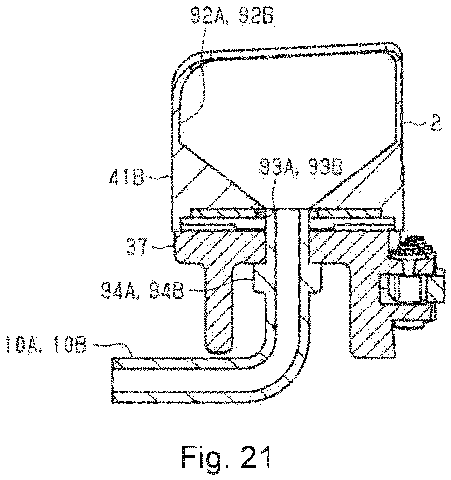

As shown in Fig. 19, the first and second suction ports 91A and 91B are sized approximately equally to the width of the brake shoe 2. As shown in Fig. 20, the first and second through holes 93A and 93B in the metal pedestal 42 are much smaller than the first and second suction ports 91A and 91B. As shown in Fig. 21, the first and second channels 92A and 92B formed in the metal blocks 41B are tapered such that their size decreases from the first and second suction ports 91A and 91B toward the first and second through holes 93A and 93B.

### <Operation>

The following now describes how the above-described dust collecting device works with reference to Fig. 18. As the negative pressure source is put into operation, the first and second dust collectors 90A and 90B may suction the abrasion powder. The abrasion powder in the vicinity of the first and second suction ports 91A and 91B is suctioned. The abrasion powder suctioned through the first suction port 91A is collected through the first channel 92A and first tube 10A. The abrasion powder suctioned through the second suction port 91B is collected through the second channel 92B and second tube 10B.

The first and second dust collectors 90A and 90B are not positioned in the path along which the shoe cotter 46 may be inserted or the path along which the lock 47 may move, and neither are the first and second tube connection ports 94A and 94B. To be replaced, the brake shoe 2 can be thus removed from the shoe head 37 while the first tube 10A remains connected to the first dust collector 90A and the second tube 10B remains connected to the second dust collector 90B.

### Advantageous effects of the fifth embodiment will be now described.

(5-1) The first and second dust collectors 90A and 90B are provided outside the path along which the shoe cotter 46 may be inserted. Therefore, the brake shoe 2 may be detached from and attached onto the shoe head 37 while the first tube 10A remains connected to the first dust collector 90A and the second tube 10B remains connected to the second dust collector 90B.

(5-2) As the shoe cotter 46 has an L-shape, the first and second dust collectors 90A and 90B can be more flexibly arranged in the longitudinal direction of the shoe head 37.

(5-3) The first and second tubes 10A and 10B are supported at a site outside the path along which the shoe cotter 46 may be inserted. Therefore, the brake shoe 2 may be detached from and attached onto the shoe head 37 while the first and second tubes 10A and 10B remain connected to the shoe head 37.

(5-4) The first and second suction ports 91A and 91B are formed in the metal blocks 41B of the brake shoe 2. The first and second suction ports 91A and 91B can be thus more readily manufactured than in the case where they are formed in the composite member 41A. The composite member 41A is more fragile than the metal blocks 41B of the friction member 41.

### <Sixth Embodiment>

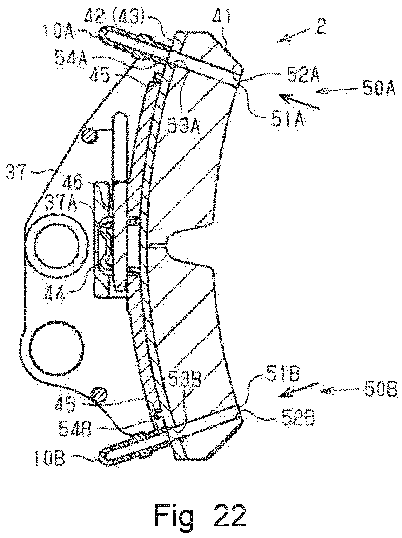

The following describes a brake shoe attachment structure of a tread brake unit device according to a sixth embodiment with reference to Fig. 22. The sixth embodiment is different from the first embodiment in that the dust collector is arranged near the ends of the brake shoe 2. The following description will be focused on the differences from the first embodiment.

### <Dust Collecting Device>

As shown in Fig. 22, the dust collector is disposed in the brake shoe 2 and shoe head 37. The dust collector includes the first and second dust collectors 50A and 50B. The first dust collector 50A is close to the upper portion of the brake shoe 2. The second dust collector 50B is close to the lower portion of the brake shoe 2.

The first and second dust collectors 50A and 50B are provided outside the path along which the shoe cotter 46 may be inserted and the path along which the lock 47 may move. The brake shoe 2 has near its upper portion the first suction port 51A through which the abrasion powder can be suctioned. The first dust collector 50A is provided on the pedestal plate 43 outside the lock plate 45 in the longitudinal direction of the pedestal plate 43 of the metal pedestal 42. The first dust collector 50A has the first channel 52A that is provided near the upper portion of the shoe head 37 and connected to the first suction port 51A. The first channel 52A extends through the friction member 41 and is connected to the first through hole 53A that is formed in the pedestal plate 43 outside the lock plate 45. The first channel 52A has the first tube connection port 54A connected to the negative pressure source. The first tube connection port 54A is positioned in the shoe head 37 outside the path along which the shoe cotter 46 may be inserted and the path along which the lock 47 may move.

The brake shoe 2 has near its lower portion the second suction port 51B through which the abrasion powder can be suctioned. The second dust collector 50B is provided on the pedestal plate 43 outside the lock plate 45 in the longitudinal direction of the pedestal plate 43 of the metal pedestal 42. The second dust collector 50B has the second channel 52B that is provided near the lower portion of the shoe head 37 and connected to the second suction port 51B. The second channel 52B extends through the friction member 41 and is connected to the second through hole 53B that is formed in the pedestal plate 43 outside the lock plate 45. The second channel 52B has the second tube connection port 54B connected to the negative pressure source. The second tube connection port 54B is positioned in the shoe head 37 outside the path along which the shoe cotter 46 may be inserted and the path along which the lock 47 may move.

### <Operation>

The following now describes how the above-described dust collecting device works with reference to Fig. 22. As the negative pressure source is put into operation, the first and second dust collectors 50A and 50B may suction the abrasion powder. The abrasion powder in the vicinity of the first and second suction ports 51A and 51B is suctioned. The abrasion powder suctioned through the first suction port 51A is collected through the first channel 52A and first tube 10A. The abrasion powder suctioned through the second suction port 51B is collected through the second channel 52B and second tube 10B.

The first and second dust collectors 50A and 50B are not positioned in the path along which the shoe cotter 46 may be inserted or the path along which the lock 47 may move, and neither the first and second tube connection ports 54A and 54B. To be replaced, the brake shoe 2 can be thus removed from the shoe head 37 while the first tube 10A remains connected to the first dust collector 50A and the second tube 10B remains connected to the second dust collector 50B.

Advantageous effects of the sixth embodiment will be now described. The following advantageous effects are obtained in addition to the advantageous effects (1-1) to (1-3) of the first embodiment.

(2-1) The first and second dust collectors 50A and 50B are provided on the pedestal plate 43 outside the lock plates 45 in the longitudinal direction of the pedestal plate 43. Therefore, the brake shoe 2 can be detached from and attached onto the shoe head 37 while the first tube 10A remains connected to the first dust collector 50A and the second tube 10B remains connected to the second dust collector 50B.

### <Seventh Embodiment>

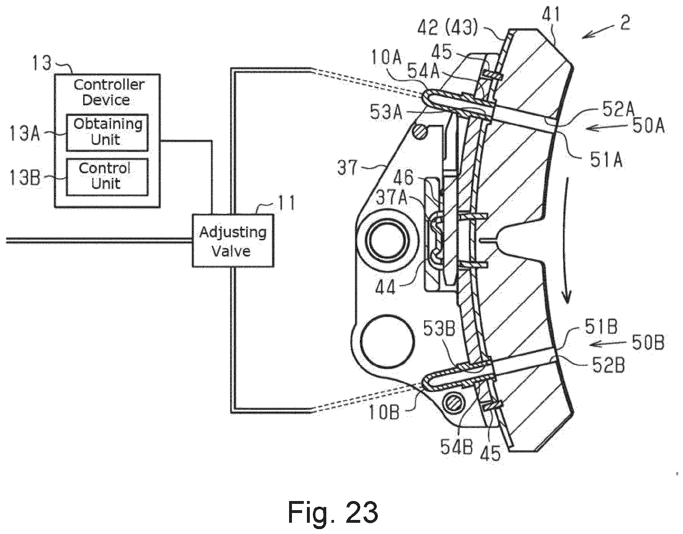

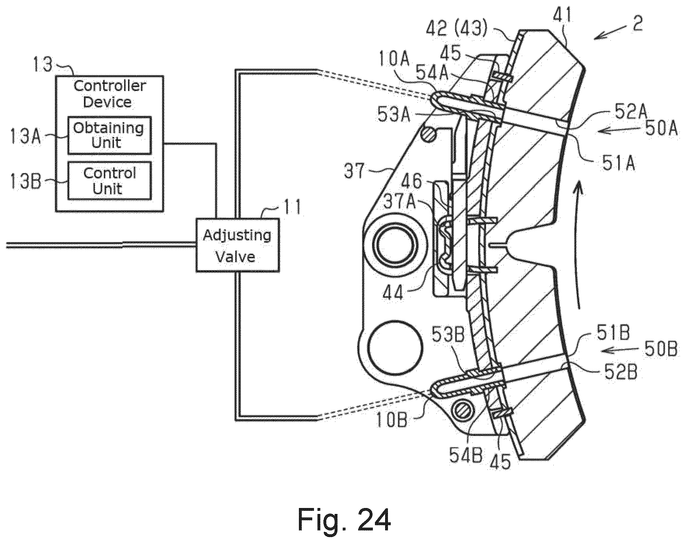

The following describes a brake shoe attachment structure of a tread brake unit device according to a seventh embodiment with reference to Figs. 23 and 24. The seventh embodiment is different from the first embodiment in that the dust collector can adjust the suction force at the upper and lower suction ports. The following description will be focused on the differences from the first embodiment.

As shown in Figs. 23 and 24, the first and second dust collectors 50A and 50B include an adjusting valve 11, an obtaining unit 13A, and a control unit 13B. The adjusting valve 11 is connected to the negative pressure source and also connected to the first and second tubes 10A and 10B. The adjusting valve 11 adjusts the suction force at the first suction port 51A in the upper portion of the shoe head 37, and the suction force at the second suction port 51B in the lower portion of the shoe head 37.

The obtaining unit 13A and control unit 13B are included in a control device 13. The control device 13 may be formed of one or more processors that perform various processes in accordance with computer programs (software). Alternatively, the control device 13 may be formed of one or more dedicated hardware circuits such as application-specific integrated circuits (ASICs) that perform at least a part of the various processes, or it may be formed of circuitry including a combination of such circuits. The processors include a CPU and a memory such as a RAM or ROM. The memory stores program codes or instructions configured to cause the CPU to perform processes. The memory, or a computer-readable medium, encompasses any kind of available media accessible via a general-purpose or dedicated computer. The obtaining unit 13A can obtain traveling information indicating the traveling direction in which the wheel 3 is moving. The control unit 13B controls the adjusting valve 11 based on the traveling information. Specifically, the control unit 13B controls the adjusting valve 11 such that the suction force at the upstream suction port in the direction of the rotation of the wheel 3 may decline by a predetermined amount and the suction force at the downstream suction port in the direction of the rotation of the wheel 3 may grow by the same predetermined amount.

### <Operation>

The following now describes how the above-described dust collecting device works with reference to Figs. 23 and 24.

As the negative pressure source is put into operation, the obtaining unit 13A obtains the traveling information, and the control unit 13B controls the adjusting valve 11 so that the suction force at the downstream suction port can be greater than the suction force at the upstream suction port. Specifically, when the wheel 3 rotates downward as shown in Fig. 23, the terms "upstream" and "downstream" respectively indicate above and below the brake shoe 2. The control unit 13B decreases the suction force at the first suction port 51A by a predetermined amount and increases the suction force at the second suction port 51B by the predetermined amount. The adjusting valve 11 decreases the flow rate through the first tube 10A by a predetermined amount to increase the flow rate through the second tube 10B by the predetermined amount. When the wheel 3 rotates upward as shown in Fig. 24, the terms "upstream" and "downstream" respectively indicate below and above the brake shoe 2. The control unit 13B increases the suction force at the first suction port 51A by a predetermined amount and decreases the suction force at the second suction port 51B by the predetermined amount. The adjusting valve 11 decreases the flow rate through the second tube 10B by a predetermined amount to increase the flow rate through the first tube 10A by the predetermined amount.

The first and second dust collectors 50A and 50B may suction the abrasion powder. The abrasion powder in the vicinity of the first and second suction ports 51A and 51B is suctioned. The abrasion powder suctioned through the first suction port 51A is collected through the first channel 52A and first tube 10A. The abrasion powder suctioned through the second suction port 51B is collected through the second channel 52B and second tube 10B.

Advantageous effects of the seventh embodiment will be now described. The following advantageous effects are obtained in addition to the advantageous effects (1-1) to (1-3) of the first embodiment.

(7-1) The adjusting valve 11 can increase the suction force downstream in the direction of the rotation of the wheel 3 and decrease the suction force upstream in the direction of the rotation of the wheel. Therefore, a large amount of abrasion powder downstream in the direction of the rotation of the wheel 3 can be efficiently suctioned irrespective of the direction of the rotation of the wheel 3.

### <Eighth Embodiment>

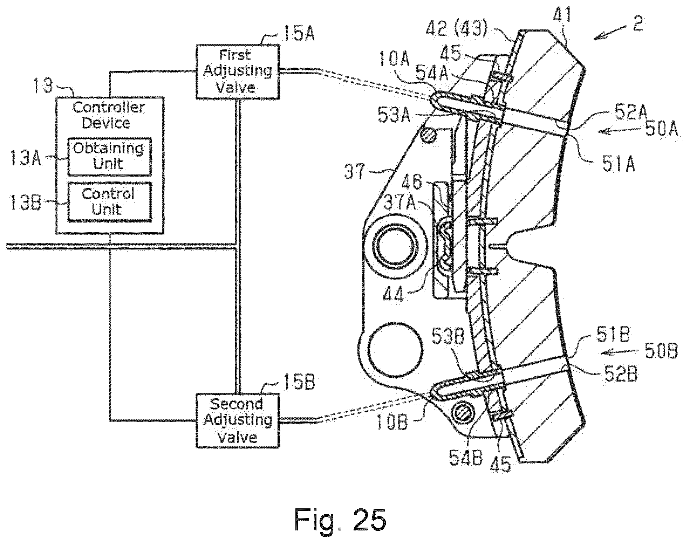

The following describes a brake shoe attachment structure of a tread brake unit device according to an eighth embodiment with reference to Fig. 25. The eighth embodiment is different from the above-described seventh embodiment in that the dust collector includes adjusting valves provided on the respective tubes. The following description will be focused on the differences between the seventh and eighth embodiments.

As shown in Fig. 25, the first and second dust collectors 50A and 50B include a first adjusting valve 15A, a second adjusting valve 15B, an obtaining unit 13A and a control unit 13B. The first adjusting valve 15A is connected to the negative pressure source and also connected to the first tube 10A. The first adjusting valve 15A can adjust the suction force at the first suction port 51A provided in the upper portion of the shoe head 37. The second adjusting valve 15B is connected to the negative pressure source and also connected to the second tube 10B. The second adjusting valve 15B can adjust the suction force at the second suction port 51B provided in the lower portion of the shoe head 37.

### <Operation>

The following now describes how the above-described dust collecting device works with reference to Fig. 25. As the negative pressure source is put into operation, the obtaining unit 13A obtains the traveling information, and the control unit 13B controls the adjusting valves 15A and 15B so that the suction force at the downstream suction port can be greater than the suction force at the upstream suction port. Specifically, the downstream adjusting valve selected from among the first and second adjusting valves 15A and 15B increases the flow rate by a predetermined amount. The upstream adjusting valve selected from among the first and second adjusting valves 15A and 15B decreases the flow rate by a predetermined amount.

Advantageous effects of the eighth embodiment will be now described. The following advantageous effects are obtained in addition to the advantageous effects (1-1) to (1-3) of the first embodiment.

(8-1) The first and second adjusting valves 15A and 15B can decrease the suction force upstream in the direction of the rotation of the wheel 3 and increase the suction force downstream in the direction of the rotation of the wheel 3. Therefore, a large amount of abrasion powder downstream in the direction of the rotation of the wheel 3 can be efficiently suctioned irrespective of the direction of the rotation of the wheel 3.

### <Ninth Embodiment>

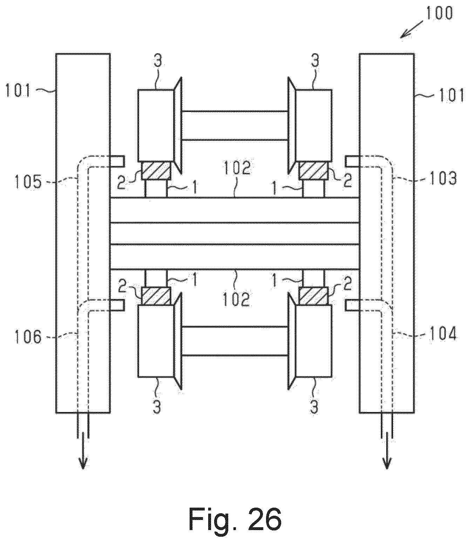

With reference to Fig. 26, the following describes a ninth embodiment of the dust collecting device. A variety of devices including wheels and brakes are provided on bogies of railway vehicles. This may lead to requiring that the tubes of the dust collecting devices be disposed within a limited space.

As shown in Fig. 26, a bogie 100 includes wheels 3, side beams 101 extending in the direction of a track, and a transverse beam 102 extending orthogonally to the track. The transverse beam 102 has tread brake unit devices 1 fixedly attached for braking the respective wheels 3. The brake shoe 2, which is attached onto the shoe head 37 of each tread brake unit device 1, is pressed against the tread 3A of the corresponding wheel 3. As the brake shoe 2 is pressed, abrasion powder is produced.

To suction the abrasion powder, the bogie 100 has a dust collecting device. The dust collecting device includes a first tube 103, a second tube 104, a third tube 105, and a fourth tube 106 connected to a negative pressure source. The first and second tubes 103 and 104 are provided inside the right side beam 101. The third and fourth tubes 105 and 106 are provided inside the left side beam 101. A first suction port of the first tube 103 protrudes from the side beam 101 and is positioned near the upper right brake shoe 2. A second suction port of the second tube 104 protrudes from the side beam 101 and is positioned near the lower right brake shoe 2. A third suction port of the third tube 105 protrudes from the side beam 101 and is positioned near the upper left brake shoe 2. A fourth suction port of the fourth tube 106 protrudes from the side beam 101 and is positioned near the lower left brake shoe 2.

### <Operation>

The following now describes how the above-described dust collecting device works with reference to Fig. 26. As the negative pressure source is put into operation, the first, second, third and fourth tubes 103, 104, 105 and 106 may suction the abrasion powder. The abrasion powder in the vicinity of the suction ports is suctioned. The suctioned abrasion powder is collected through the first, second, third and fourth tubes 103, 104, 105 and 106.

Advantageous effects of the ninth embodiment will be now described.

(9-1) The first, second, third and fourth tubes 103, 104, 105 and 106 connected to the negative pressure source are provided inside the side beams 101 of the bogie 100. Therefore, the tubes require less space.

### <Other Embodiments>

The foregoing embodiments can be modified as described below. The above embodiments and the following modifications can be implemented in combination to the extent where they are technically consistent with each other.

The above-described third embodiment provides, as the switch, the first and second valves 73A and 73B configured to change its state depending on the aerodynamic drag. Alternatively, the control unit may obtain the traveling information of the railway vehicle and determine whether the openings open or close based on the obtained traveling information.

The above-described fourth embodiment provides two first tubes 10A, but may alternatively provide one first tube 10A. Likewise, the fourth embodiment provides two second tubes 10B, but may alternatively provide one second tube 10B.

According to the fourth embodiment, the first and second suction ports 81A and 81B of the first and second dust collectors 80A and 80B have a greater width than the brake shoe 2. Alternatively, the first and second suction ports 81A and 81B of the first and second dust collectors 80A and 80B may alternatively have the same width as or a smaller width than the brake shoe 2.

In the above-described embodiments, the suction ports of the dust collectors may open toward outside of the railway vehicle where the dust collectors are provided. In this manner, while the railway vehicle is traveling on the track, the dust collectors can collect the abrasion powder that is blown away from the track irrespective of the direction of the traveling.

The foregoing embodiments include a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

According to the foregoing embodiments, a plurality of functions may be distributively provided. Some or all of the functions may be integrated. Alternatively, a plurality of functions may be collectively provided. Some or all of the functions may be distributively provided. Irrespective of whether or not the functions are integrated or distributed, they are acceptable as long as they are configured to solve the problems.

The following describes the technical ideas that can be grasped from the above embodiments and their modifications and the advantageous effects thereof.
(A) A dust collecting device including a tube provided inside a beam of a bogie having a wheel, the tube being connected to a negative pressure source, a suction port of the tube protruding from the beam and being positioned near a brake shoe that is to be driven by a brake cylinder.

In the above-described dust collecting device, the tube connected to the negative pressure source is contained inside the beam of the bogie. Therefore, the tube requires less space.

### LIST OF REFERENCE NUMBERS

- 1: tread brake unit device
- 2: brake shoe
- 3: wheel
- 3A: tread
- 3B: flange
- 10A: first tube
- 10B: second tube
- 11: adjusting valve
- 13: controller device
- 13A: obtaining unit
- 13B: control unit
- 15A: first adjusting valve
- 15B: second adjusting valve
- 20: air brake cylinder
- 20A: feeding port
- 21: cylinder
- 21A: working chamber
- 22: loosening spring
- 23: piston
- 23A: connecting pin
- 30: transmission drive unit
- 31: body
- 31A: retaining portion
- 31B: coupling pin
- 32: brake lever
- 32A: spherical through hole
- 33: support shaft
- 34: spherical bearing
- 35: casing rod
- 36: pressing rod
- 36A: coupling pin
- 37: shoe head
- 37A: depression
- 38: hanger
- 39: manual adjustment nut
- 41: friction member
- 41A: composite member
- 41B: metal block
- 42: metal pedestal
- 43: pedestal plate
- 44: attachment plate
- 45: lock plate
- 46: shoe cotter
- 47: lock
- 47A: rotational shaft
- 48: shoe cotter
- 50A: first dust collector
- 50B: second dust collector
- 51A: first suction port
- 51B: second suction port
- 52A: first channel
- 52B: second channel
- 53A: first through hole
- 53B: second through hole
- 54A: first tube connection port
- 54B: second tube connection port
- 60A: first dust collector
- 60B: second dust collector
- 61A: first suction port
- 61B: second suction port
- 62A: first support portion
- 62B: second support portion
- 70A: first dust collector
- 70B: second dust collector
- 71A: first front opening
- 71B: second front opening
- 72A: first rear opening
- 72B: second rear opening
- 73A: first valve (switch)
- 73B: second valve (switch)
- 74A: first support portion
- 74B: second support portion
- 80A: first dust collector
- 80B: second dust collector
- 81A: first suction port
- 81B: second suction port
- 82A: first support portion
- 82B: second support portion
- 90A: first dust collector
- 90B: second dust collector
- 91A: first suction port
- 91B: second suction port
- 92A: first channel
- 92B: second channel
- 93A: first through hole
- 93B: second through hole
- 94A: first tube connection port
- 94B: second tube connection port
- 100: bogie
- 101: side beam
- 102: transverse beam
- 103: first tube
- 104: second tube
- 105: third tube
- 106: fourth tube

## Claims

1. A brake shoe attachment structure of a tread brake unit device (1), comprising:
a shoe head (37) having a depression (37A) for receiving a protrusion (44) of a brake shoe (2);
a shoe cotter (46) configured to be inserted into the depression (37A) and into an opening in the protrusion (44) so that the shoe cotter (46) attaches the brake shoe (2) onto the shoe head (37); **characterised by**
a dust collector (50A, 50B, 60A, 60B, 70A, 70B, 80A, 80B, 90A, 90B) configured to collect abrasion powder resulting from the brake shoe (2) being pressed against a tread (3A) of a wheel (3),
wherein the dust collector (50A, 50B, 60A, 60B, 70A, 70B, 80A, 80B, 90A, 90B) is provided outside a path along which the shoe cotter (46) is inserted.

2. The brake shoe attachment structure of claim 1,
wherein the shoe cotter (46) is L-shaped,
wherein the brake shoe attachment structure further comprises a lock (47) movable between (i) a restriction position where the lock (47) restricts movement of the shoe cotter (46) received in the depression (37A) and the opening in the protrusion (44) and (ii) a non-restriction position where the lock (47) allows the shoe cotter (46) to move, and
wherein the dust collector (50A, 50B, 60A, 60B, 70A, 70B, 80A, 80B, 90A, 90B) is provided outside the path along which the shoe cotter (46) is inserted and a path along which the lock (47) moves.

3. The brake shoe attachment structure of claim 1 or 2,
wherein the brake shoe (2) has a suction port (51A, 51B, 91A, 91B) through which the abrasion powder is suctioned,
wherein the dust collector (50A, 50B, 90A, 90B) has a channel (52A, 52B, 92A, 92B) provided in the shoe head (37) and connected to the suction port (51A, 51B, 91A, 91B), and
wherein the channel (52A, 52B) has a tube connection port (54A, 54B, 94A, 94B) connected to a negative pressure source, and the tube connection port (54A, 54B, 94A, 94B) is formed in the shoe head (37) and positioned outside the path along which the shoe cotter (46) is inserted.

4. The brake shoe attachment structure of claim 1 or 2,
wherein the dust collector (60A, 60B, 70A, 70B, 80A, 80B) includes a suction port (61A, 61B, 71A, 71B, 72A, 72B, 81A, 81B) through which the abrasion powder is suctioned, and a tube (10A, 10B) connecting the suction port (61A, 61B, 71A, 71B, 72A, 72B, 81A, 81B) to a negative pressure source,
wherein the shoe head (37) has a support portion (62A, 62B, 74A, 74B, 82A, 82B) supporting the tube (10A, 10B), and
wherein the support portion (62A, 62B, 74A, 74B, 82A, 82B) is provided outside the path along which the shoe cotter (46) is inserted.

5. The brake shoe attachment structure of claim 4, wherein the suction port (61A, 61B, 71A, 71B, 72A, 72B, 81A, 81B) of the dust collector (60A, 60B, 70A, 70B, 80A, 80B) is positioned on a side opposite to a side where a flange (3B) is provided in a width direction of the tread (3A) of the wheel (3).

6. The brake shoe attachment structure of claim 4, wherein, with the brake shoe attachment structure being provided on a vehicle including the wheel (3), the suction port (61A, 61B, 71A, 71B, 72A, 72B, 81A, 81B) of the dust collector (60A, 60B, 70A, 70B, 80A, 80B) opens toward outside of the vehicle.

7. The brake shoe attachment structure of claim 4,
wherein the suction port (71A, 71B, 72A, 72B) of the dust collector (70A, 70B) includes a first opening (71A, 71B) and a second opening (72A, 72B) respectively opening toward opposite sides in a direction in which a vehicle having the wheel (3) travels, and
wherein the dust collector (70A, 70B) includes a switch (73A, 73B) for opening a front one of the first and second openings (71A, 71B, 72A, 72B) and closing a rear one of the first and second openings (71A, 71B, 72A, 72B) in the direction in which the vehicle travels.

8. The brake shoe attachment structure of claim 4, wherein at least one of an upper portion or a lower portion of the shoe head (37) has the suction port (61A, 61B, 71A, 71B, 72A, 72B, 81A, 81B) of the dust collector (60A, 60B, 70A, 70B, 80A, 80B).

9. The brake shoe attachment structure of claim 8,
wherein the upper and lower portions of the shoe head (37) each has the suction port (51A, 51B), and
wherein the dust collector (50A, 50B) includes:
an adjusting valve (11) for adjusting a suction force at the suction ports (51A, 51B) in the upper and lower portions of the shoe head (37);
an obtaining unit (13A) for obtaining traveling information indicating a direction in which the wheel (3) travels; and
a control unit (13B) for controlling the adjusting valve (11) based on the traveling information such that a suction force at the suction port upstream in a direction of rotation of the wheel (3) declines by a predetermined amount and a suction force at the suction port downstream in the direction of the rotation of the wheel (3) grows by the predetermined amount.

10. The brake shoe attachment structure of claim 8, wherein the suction port (81A, 81B) has a greater width than the brake shoe (2).

11. The brake shoe attachment structure of claim 9, wherein the suction port (81A, 81B) extends outwardly beyond a longitudinal end of the brake shoe (2).

12. The brake shoe attachment structure of claim 4, wherein the tube (10A, 10B) of the dust collector (60A, 60B, 70A, 70B) is connected to the suction port (61A, 61B, 71A, 71B, 72A, 72B) at a site on a side opposite to a side where a flange (3B) is provided in a width direction of the tread (3A) of the wheel (3).

13. A brake shoe (2) of a tread brake unit device (1), comprising:
a pedestal plate (43) having a protrusion (44) to fit in a depression (37A) in a shoe head (37), and a lock plate (45) to engage with the shoe head (37) for positioning; and
a friction member (41) provided on a surface of the pedestal plate (43) facing away from a surface where the protrusion (44) and the lock plate (45) are provided, the friction member (41) being configured to be pressed against a wheel (3),
wherein a collector (50A, 50B) is configured to collect abrasion powder resulting from the friction member (41) being pressed against the wheel (3), **characterised in that** the pedestal plate (43) is shaped like a curved plate, wherein a dust collector (50A, 50B) is provided on the pedestal plate (43) outside the lock plate (45) in a longitudinal direction of the pedestal plate (43).

14. A brake shoe (2) of a tread brake unit device (1), comprising:
a pedestal plate (43) shaped like a curved plate, the pedestal plate (43) having a protrusion (44) on one surface thereof to fit in a depression (37A) in a shoe head (37); and
a friction member (41) provided on a surface of the pedestal plate (43) facing away from the surface where the protrusion (44) is provided, the friction member (41) being configured to be pressed against a wheel (3),
wherein the friction member (41) is constituted by a composite member (41A) mainly made of synthetic resin, **characterised by** a lock plate (45) that is configured to engage with the shoe head (37) for positioning, and a metal block (41B) extending through the composite member (41A) to be exposed at a friction surface facing the wheel (3), and
wherein the metal block (41B) has a suction port (91A, 91B) through which abrasion powder of the friction member (41) is suctioned.

## Patentansprüche

1. Bremsbackenbefestigungsstruktur einer Klotzbremsvorrichtung (1), mit:
einem Bremsbackenkopf (37) mit einer Vertiefung (37A) zur Aufnahme eines Vorsprungs (44) einer Bremsbacke (2);
einem Bremsbackensplint (46), der ausgebildet ist, in die Vertiefung (37A) und in eine Öffnung in dem Vorsprung (44) einführbar zu sein, sodass der Bremsbackensplint (46) die Bremsbacke (2) an dem Bremsbackenkopf (37) hält;
**gekennzeichnet durch**
einen Staubfänger (50A, 50B, 60A, 60B, 70A, 70B, 80A, 80B, 90A, 90B), der ausgebildet ist, Abriebstaub aufzufangen, der entsteht, wenn die Bremsbacke (2) gegen eine Lauffläche (3A) eines Rades (3) gedrückt wird,
wobei der Staubfänger (50A, 50B, 60A, 60B, 70A, 70B, 80A, 80B, 90A, 90B) außerhalb eines Weges vorgesehen ist, entlang dem der Backensplint (46) eingeführt wird.

2. Bremsbackenbefestigungsstruktur nach Anspruch 1,
wobei der Backensplint (46) L-förmig ist,
wobei die Bremsbackenbefestigungsvorrichtung ferner eine Verriegelung (47) aufweist, die in (i) eine Sperrposition, in der die Verriegelung (47) die Bewegung des in der Vertiefung (37A) und der Öffnung in dem Vorsprung (44) eingeführten Backensplints (46) einschränkt, und (ii) eine Nicht-Einschränkungsposition, in der die Verriegelung (47) eine Bewegung des Backensplints (46) zulässt, und
wobei der Staubfänger (50A, 50B, 60A, 60B, 70A, 70B, 80A, 80B, 90A, 90B) außerhalb des Weges, entlang dem der Backensplint (46) eingeführt wird, und eines Weges, entlang dem sich die Verriegelung (47) bewegt, vorgesehen ist.

3. Bremsbackenbefestigungsstruktur nach Anspruch 1 oder 2,
wobei die Bremsbacke (2) einen Sauganschluss (51A, 51B, 91A, 91 B) aufweist, durch den der Abriebstaub abgesaugt wird,
wobei der Staubfänger (50A, 50B, 90A, 90B) einen Kanal (52A, 52B, 92A, 92B) aufweist, der in dem Bremsbackenkopf (37) vorgesehen und mit dem Sauganschluss (51A, 51B, 91A, 91B) verbunden ist, und
der Kanal (52A, 52B) einen Rohrverbindungsanschluss (54A, 54B, 94A, 94B) aufweist, der mit einer Unterdruckquelle verbunden ist, und der Rohrverbindungsanschluss (54A, 54B, 94A, 94B) in dem Bremsbackenkopf (37) ausgebildet und außerhalb des Weges positioniert ist, entlang dem der Backensplint (46) eingeführt wird.

4. Bremsbackenbefestigungsstruktur nach Anspruch 1 oder 2,
wobei der Staubfänger (60A, 60B, 70A, 70B, 80A, 80B) einen Sauganschluss (61A, 61B, 71A, 71B, 72A, 72B, 81A, 81B), durch den der Abriebstaub abgesaugt wird, und ein Rohr (10A, 10B) aufweist, das den Sauganschluss (61A, 61B, 71A, 71B, 72A, 72B, 81A, 81B) mit einer Unterdruckquelle verbindet,
wobei der Bremsbackenkopf (37) einen Stützabschnitt (62A, 62B, 74A, 74B, 82A, 82B) hat, der das Rohr (10A, 10B) trägt, und
wobei der Stützabschnitt (62A, 62B, 74A, 74B, 82A, 82B) außerhalb des Weges vorgesehen ist, entlang dem der Backensplint (46) eingeführt wird.

5. Bremsbackenbefestigungsstruktur nach Anspruch 4, wobei der Sauganschluss (61A, 61B, 71A, 71B, 72A, 72B, 81A, 81B) des Staubfängers (60A, 60B, 70A, 70B, 80A, 80B) auf einer Seite angeordnet ist, die einer Seite gegenüber liegt, an der ein Flansch (3B) in Breitenrichtung der Lauffläche (3A) des Rades (3) vorgesehen ist.

6. Bremsbackenbefestigungsstruktur nach Anspruch 4, wobei die Bremsbackenbefestigungsstruktur an einem Fahrzeug vorgesehen ist, das das Rad (3) aufweist, und der Sauganschluss (61A, 61B, 71A, 71B, 72A, 72B, 81A, 81B) des Staubfängers (60A, 60B, 70A, 70B, 80A, 80B) zur Außenseite des Fahrzeugs hin geöffnet ist.

7. Bremsbackenbefestigungsstruktur nach Anspruch 4,
wobei der Sauganschluss (71A, 71B, 72A, 72B) des Staubfängers (70A, 70B) eine erste Öffnung (71A, 71B) und eine zweite Öffnung (72A, 72B) aufweist, die entsprechend zu gegenüberliegenden Seiten in einer Richtung hin offen sind, in der ein Fahrzeug, das das Rad (3) aufweist, fährt, und
der Staubfänger (70A, 70B) einen Schalter (73A, 73B) zum Öffnen einer vorderen Öffnung der ersten und zweiten Öffnung (71A, 71B, 72A, 72B) und zum Schließen einer hinteren Öffnung der ersten und zweiten Öffnung (71A, 71B, 72A, 72B) in der Fahrtrichtung des Fahrzeugs aufweist.

8. Bremsbackenbefestigungsstruktur nach Anspruch 4, wobei ein oberer und/oder unterer Teil des Bremsbackenkopfes (37) den Sauganschluss (61A, 61B, 71A, 71B, 72A, 72B, 81A, 81B) des Staubfängers (60A, 60B, 70A, 70B, 80A, 80B) aufweist.

9. Bremsbackenbefestigungsstruktur nach Anspruch 8,
wobei der obere und der untere Teil des Bremsbackenkopfes (37) jeweils den Sauganschluss (51A, 51B) aufweisen und
wobei der Staubfänger (50A, 50B) aufweist:
ein Einstellventil (11) zum Einstellen einer Saugkraft an den Sauganschlüssen (51A, 51B) in dem oberen und unteren Teil des Bremsbackenkopfes (37);
eine Erfassungseinheit (13A) zum Erfassen von Fahrinformationen, die eine Richtung angeben, in der sich das Rad (3) bewegt; und
eine Steuereinheit (13B) zum Steuern des Einstellventils (11) auf der Grundlage der Fahrinformationen, so dass eine Saugkraft an dem Sauganschluss stromaufwärts in Drehrichtung des Rades (3) um einen vorbestimmten Betrag abnimmt und eine Saugkraft an dem Sauganschluss stromabwärts in Drehrichtung des Rades (3) um den vorbestimmten Betrag zunimmt.

10. Bremsbackenbefestigungsstruktur nach Anspruch 8, wobei der Sauganschluss (81A, 81B) eine größere Breite als die Bremsbacke (2) aufweist.

11. Bremsbackenbefestigungsstruktur nach Anspruch 9, wobei sich der Sauganschluss (81A, 81B) über ein Ende in Längsrichtung der Bremsbacke (2) hinaus nach außen erstreckt.

12. Bremsbackenbefestigungsstruktur nach Anspruch 4, wobei das Rohr (10A, 10B) des Staubfängers (60A, 60B, 70A, 70B) mit dem Sauganschluss (61A, 61B, 71A, 71B, 72A, 72B) an einer Stelle auf einer Seite verbunden ist, die einer Seite gegenüber liegt, an der ein Flansch (3B) in Breitenrichtung der Lauffläche (3A) des Rades (3) vorgesehen ist.

13. Bremsbacke (2) einer Klotzbremseinheitsvorrichtung (1), mit:
einer Sockelplatte (43) mit einem Vorsprung (44), der in eine Vertiefung (37A) in einem Bremsbackenkopf (37) passt, und mit einer Verriegelungsplatte (45) zum Eingriff mit dem Bremsbackenkopf (37) zur Positionierung; und
einem Reibungselement (41), das auf einer Oberfläche der Sockelplatte (43) vorgesehen ist, die von einer Fläche weg zeigt, an der der Vorsprung (44) und die Verriegelungsplatte (45) vorgesehen sind, wobei das Reibungselement (41) ausgebildet ist, gegen ein Rad (3) gedrückt zu werden,
wobei ein Staubfänger (50A, 50B) ausgebildet ist, Abriebstaub zu sammeln, der dadurch entsteht, dass das Reibungselement (41) gegen das Rad (3) gedrückt wird,
**dadurch gekennzeichnet, dass**
die Sockelplatte (43) wie eine gekrümmte Platte geformt ist, wobei ein Staubfänger (50A, 50B) an der Sockelplatte (43) außerhalb der Verriegelungsplatte (45) in Längsrichtung der Sockelplatte vorgesehen ist.

14. Bremsbacke (2) einer Bremsbacke (2) einer Klotzbremseinheitsvorrichtung (1), mit:
einer Sockelplatte (43) in Form einer gekrümmten Platte, wobei die Sockelplatte (43) an einer ihrer Oberflächen einen Vorsprung (44) aufweist, der in eine Vertiefung (37A) in einem Bremsbackenkopf (37) passt; und
einem Reibungselement (41), das auf einer Fläche der Sockelplatte (43) vorgesehen ist, die von der Fläche, an der der Vorsprung (44) vorgesehen ist, abgewandt ist, wobei das Reibungselement (41) ausgebildet ist, gegen ein Rad (3) gedrückt zu werden,
wobei das Reibungselement (41) aus einem Verbundelement (41A) besteht, das hauptsächlich aus Kunststoff aufgebaut ist,
**gekennzeichnet durch**
eine Verriegelungsplatte (45), die ausgebildet ist, zur Positionierung mit dem Bremsbackenkopf (37) in Eingriff zu treten, und einen Metallblock (41B), der sich durch das Verbundelement (41A) so erstreckt, dass er an einer dem Rad (3) zugewandten Reibungsfläche freiliegt, und
wobei der Metallblock (41B) einen Sauganschluss (91A, 91B) aufweist, durch den Abriebstaub des Reibungselements (41) abgesaugt wird.

## Revendications

1. Structure de fixation de segment de frein d'un dispositif d'unité de frein à tambour (1), comprenant :
une tête de segment (37) présentant un enfoncement (37A) pour recevoir une saillie (44) d'un segment de frein (2) ;
une clavette de segment (46) conçue pour être insérée dans l'enfoncement (37A) et dans une ouverture de la saillie (44) de sorte que la clavette de segment (46) fixe le segment de frein (2) sur la tête de segment (37) ; **caractérisé par**
un collecteur de poussière (50A, 50B, 60A, 60B, 70A, 70B, 80A, 80B, 90A, 90B) configuré pour collecter la poudre d'abrasion résultant d'une pression du segment de frein (2) contre une bande de roulement (3A) d'une roue (3),
dans laquelle le collecteur de poussière (50A, 50B, 60A, 60B, 70A, 70B, 80A, 80B, 90A, 90B) est placé à l'extérieur d'un trajet le long duquel la clavette de segment (46) est insérée.

2. Structure de fixation de segment de frein selon la revendication 1,
dans laquelle la clavette de segment (46) est en forme de L,
dans laquelle la structure de fixation de segment de frein comprend en outre un verrou (47) mobile entre (i) une position de restriction dans laquelle le verrou (47) limite un mouvement de la clavette de segment (46) reçue dans l'enfoncement (37A) et l'ouverture de la saillie (44) et (ii) une position de non-restriction dans laquelle le verrou (47) permet un mouvement de la clavette de segment (46), et
dans laquelle le collecteur de poussière (50A, 50B, 60A, 60B, 70A, 70B, 80A, 80B, 90A, 90B) est prévu à l'extérieur du trajet le long duquel la clavette de segment (46) est insérée et d'un trajet le long duquel le verrou (47) se déplace.

3. Structure de fixation de segment de frein selon la revendication 1 ou 2,
dans laquelle le segment de frein (2) présente un orifice d'aspiration (51A, 51B, 91A, 91B) à travers lequel la poudre d'abrasion est aspirée,
dans laquelle le collecteur de poussière (50A, 50B, 90A, 90B) présente un canal (52A, 52B, 92A, 92B) prévu dans la tête de segment (37) et connecté à l'orifice d'aspiration (51A, 51B, 91A, 91B), et
dans laquelle le canal (52A, 52B) présente un orifice de connexion de tube (54A, 54B, 94A, 94B) connecté à une source de pression négative, et l'orifice de connexion de tube (54A, 54B, 94A, 94B) est formé dans la tête de segment (37) et positionné à l'extérieur du trajet le long duquel la clavette de segment (46) est insérée.

4. Structure de fixation de segment de frein selon la revendication 1 ou 2,
dans laquelle le collecteur de poussière (60A, 60B, 70A, 70B, 80A, 80B) comprend un orifice d'aspiration (61A, 61B, 71A, 71B, 72A, 72B, 81A, 81B) à travers lequel la poudre d'abrasion est aspirée, et un tube (10A, 10B) connectant l'orifice d'aspiration (61A, 61B, 71A, 71B, 72A, 72B, 81A, 81B) à une source de pression négative,
dans laquelle la tête de segment (37) présente une partie de support (62A, 62B, 74A, 74B, 82A, 82B) supportant le tube (10A, 10B), et
dans laquelle la partie de support (62A, 62B, 74A, 74B, 82A, 82B) est prévue à l'extérieur du trajet le long duquel la clavette de segment (46) est insérée.

5. Structure de fixation de segment de frein selon la revendication 4, dans laquelle l'orifice d'aspiration (61A, 61B, 71A, 71B, 72A, 72B, 81A, 81B) du collecteur de poussière (60A, 60B, 70A, 70B, 80A, 80B) est positionné sur un côté opposé à un côté où une bride (3B) est prévue dans une direction de largeur de la bande de roulement (3A) de la roue (3).

6. Structure de fixation de segment de frein selon la revendication 4, dans laquelle, avec la structure de fixation de segment de frein étant prévue sur un véhicule incluant la roue (3), l'orifice d'aspiration (61A, 61B, 71A, 71B, 72A, 72B, 81A, 81B) du collecteur de poussière (60A, 60B, 70A, 70B) s'ouvre vers l'extérieur du véhicule.

7. Structure de fixation de segment de frein selon la revendication 4,
dans laquelle l'orifice d'aspiration (71A, 71B, 72A, 72B) du collecteur de poussière (70A, 70B) comprend une première ouverture (71A, 71B) et une seconde ouverture (72A, 72B) s'ouvrant respectivement vers des côtés opposés dans une direction dans laquelle un véhicule présentant la roue (3) se déplace, et
dans laquelle le collecteur de poussière (70A, 70B) comprend un commutateur (73A, 73B) pour ouvrir une certaine avant des première et seconde ouvertures (71A, 71B, 72A, 72B) et fermer une certaine arrière des première et seconde ouvertures (71A, 71B, 72A, 72B) dans la direction dans laquelle le véhicule se déplace.

8. Structure de fixation de segment de frein selon la revendication 4, dans laquelle au moins une d'une partie supérieure ou d'une partie inférieure de la tête de segment (37) présente l'orifice d'aspiration (61A, 61B, 71A, 71B, 72A, 72B, 81A, 81B) du collecteur de poussière (60A, 60B, 70A, 70B, 80A, 80B).

9. Structure de fixation de segment de frein selon la revendication 8,
dans laquelle les parties supérieure et inférieure de la tête de segment (37) présente chacune l'orifice d'aspiration (51A, 51B), et
dans laquelle le collecteur de poussière (50A, 50B) comprend :
une vanne d'ajustement (11) pour ajuster une force d'aspiration au niveau des orifices d'aspiration (51A, 51B) dans les parties supérieure et inférieure de la tête de segment (37) ;
une unité d'obtention (13A) pour obtenir des informations de déplacement indiquant une direction dans laquelle la roue (3) se déplace ; et
une unité de commande (13B) pour commander la vanne d'ajustement (11) sur la base des informations de déplacement afin qu'une force d'aspiration au niveau de l'orifice d'aspiration en amont dans une direction de rotation de la roue (3) diminue d'une quantité prédéterminée et qu'une force d'aspiration au niveau de l'orifice d'aspiration en aval dans la direction de rotation de la roue (3) augmente de la quantité prédéterminée.

10. Structure de fixation de segment de frein selon la revendication 8, dans laquelle l'orifice d'aspiration (81A, 81B) présente une plus grande largeur que le segment de frein (2).

11. Structure de fixation de segment de frein selon la revendication 9, dans laquelle l'orifice d'aspiration (81A, 81B) s'étend vers l'extérieur au-delà d'une extrémité longitudinale du segment de frein (2).

12. Structure de fixation de segment de frein selon la revendication 4, dans laquelle le tube (10A, 10B) du collecteur de poussière (60A, 60B, 70A, 70B) est connecté à l'orifice d'aspiration (61A, 61B, 71A, 71B, 72A, 72B) au niveau d'un site sur un côté opposé à un côté où une bride (3B) est prévue dans une direction de largeur de la bande de roulement (3A) de la roue (3).

13. Segment de frein (2) d'un dispositif d'unité de frein à tambour (1), comprenant :
une plaque de socle (43) présentant une saillie (44) pour un montage dans un enfoncement (37A) d'une tête de segment (37), et une plaque de verrouillage (45) pour une mise en prise avec la tête de segment (37) pour un positionnement ; et
un élément de friction (41) prévu sur une surface de la plaque de socle (43) orientée à l'opposé d'une surface où la saillie (44) et la plaque de verrouillage (45) sont prévues, l'élément de friction (41) étant configuré pour être pressé contre une roue (3),
dans laquelle un collecteur de poussière (50A, 50B) est configuré pour collecter de la poudre d'abrasion résultant d'une pression de l'élément de friction (41) contre la roue (3), **caractérisé en ce que** la plaque de socle (43) présente la forme d'une plaque incurvée, dans lequel un collecteur de poussière (50A, 50B) est prévu sur la plaque de socle (43) à l'extérieur de la plaque de verrouillage (45) dans une direction longitudinale de la plaque de socle (43).

14. Segment de frein (2) d'un dispositif d'unité de frein à tambour (1), comprenant :
une plaque de socle (43) présentant la forme d'une plaque incurvée, la plaque de socle (43) présentant une saillie (44) sur une surface de celle-ci pour montage dans un enfoncement (37A) dans une tête de segment (37), et
un élément de friction (41) prévu sur une surface de la plaque de socle (43) orientée à l'opposé d'une surface où la saillie (44) est prévue, l'élément de friction (41) étant configuré pour être pressé contre une roue (3),
dans lequel l'élément de friction (41) est constitué d'un élément composite (41A) réalisé principalement en résine synthétique, **caractérisé par** une plaque de verrouillage (45) qui est configurée pour une mise en prise avec la tête de segment (37) pour un positionnement, et un bloc de métal (41B) s'étendant à travers l'élément composite (41A) pour être exposé au niveau d'une surface de friction de la roue (3), et
dans lequel le bloc de métal (41B) présente un orifice d'aspiration (91A, 91B) à travers lequel de la poudre d'abrasion de l'élément de friction (41) est aspirée.
